# EUROPÄISCHE PATENTSCHRIFT

(11) **EP 4 201 760 B1**
(45) Veröffentlichungstag und Bekanntmachung des Hinweises auf die Patenterteilung: **11.06.2025**
(21) Anmeldenummer: 22203565.1
(22) Anmeldetag: 25.10.2022
(51) Int. Cl.: B60T 1/10, B60T 8/40

(54) **VERFAHREN ZUM BETREIBEN EINES BREMSSYSTEMS EINES KRAFTFAHRZEUGS**
METHOD FOR OPERATING A BRAKE SYSTEM OF A MOTOR VEHICLE
PROCÉDÉ POUR FAIRE FONCTIONNER UN SYSTÈME DE FREINAGE D'UN VÉHICULE AUTOMOBILE

(30) Priorität: 21.12.2021 DE 102021214849
(43) Veröffentlichungstag der Anmeldung: 28.06.2023
(73) Patentinhaber: Volkswagen Aktiengesellschaft, 38440 Wolfsburg (DE)
(72) Erfinder: Schmalbruch, Michael, 38302 Wolfenbüttel (DE)

(56) Entgegenhaltungen:
- WO-A1-2018/177785
- WO-A1-2019/197084
- DE-A1- 102011 103 660
- DE-A1- 102013 224 143
- DE-A1- 102016 007 436
- DE-A1- 102016 217 680
- DE-A1- 102017 207 474
- DE-A1- 102018 209 311
- DE-A1- 102020 204 345
- US-A1- 2020 079 219

## Beschreibung

Die vorliegende Erfindung betrifft ein Verfahren zum Betreiben eines Bremssystems eines Kraftfahrzeugs.

Aus der US 2010/0276240 A1 ist ein Verfahren zum Steuern eines Bremssystems für ein Fahrzeug bekannt. Bei dem Verfahren wird mittels eines Trennventils ein Hauptbremszylinder von einem Radbremszylinder getrennt. Der Hauptbremszylinder ist zum Erfassen einer Betätigung eines Bremseingabeelements ausgebildet. Ein Zufluss eines Bremsmediums von einem Reservoir zu einem Radbremszylinder wird mittels eines Steuerventils gesteuert, wodurch ein Bremsdruck an einem zugeordneten Rad eingestellt wird.

Die WO 2019/197084 A1 offenbart ein Bremssystem für ein zweiachsiges Fahrzeug. Überdies offenbart die WO 2018/177785 A1 ein Verfahren zum Kompensieren einer geringen Aktuatordynamik einer mechanischen Bremse eines Kraftfahrzeus. Weiterhin ist aus der DE 10 2020 204 345 A1 ein Verfahren zum Betrieb eines Fahrzeug-Bremssystems bekannt. Die US 2020/0079219 A1 offenbart eine Aufteilung einer Bremskraft zwischen einer Reibbremse und einer Regenerativbremse in einem Hybridfahrzeug. Aus der DE 10 2016 217 680 A1 ist ein Verfahren zum Betreiben eines Fahrzeug mit einer Traktionsbatterie und einer Bremsanlage bekannt. Die DE 10 2013 224 143 A1 offenbart ein Verfahren zum Betreiben eines Bremssystems eines Fahrzeugs.

Aufgabe der vorliegenden Erfindung ist es, eine Lösung zu schaffen, welche ein besonders gutes Reinigen von jeweiligen Radbremsen eines Kraftfahrzeugs bei einer besonders hohen Energierekuperation von Bremsenergie ermöglicht, wobei ein Bremspedalgefühl eines Fahrers besonders wenig beeinflusst wird.

Diese Aufgabe wird durch die Gegenstände des unabhängigen Anspruchs gelöst. Weitere mögliche Ausgestaltungen der Erfindung sind in den Unteransprüchen, der Beschreibung und den Figuren offenbart.

Die Erfindung betrifft ein Verfahren zum Betreiben eines Bremssystems eines Kraftfahrzeugs. Dieses Bremssystem des Kraftfahrzeugs umfasst eine Reibbremseinrichtung sowie eine Rekuperationsbremseinrichtung. Die Reibbremseinrichtung ist dazu eingerichtet, Bewegungsenergie des Kraftfahrzeugs über Reibung in Wärmeenergie umzuwandeln. Die Reibbremseinrichtung umfasst für jedes Rad des Kraftfahrzeugs eine als jeweilige Reibbremse ausgebildete Radbremse. Hierbei können die jeweiligen Radbremsen beispielsweise als Scheibenbremse oder als Trommelbremse ausgebildet sein. Die Rekuperationsbremseinrichtung ist dazu eingerichtet, Bewegungsenergie des Kraftfahrzeugs in elektrische Energie umzuwandeln. Hierfür kann die Rekuperationsbremseinrichtung einen Generator aufweisen. Insbesondere bei Fahrzeugen mit rekuperativer Bremse werden jeweilige Reibbremsen in deutlich geringerem Maße zur Verzögerung genutzt als bei Fahrzeugen, welche ausschließlich über Reibbremsen verzögert werden. Dies kann schnell und oft zu nicht optimalen Reibwertverhältnissen an den Radbremsen führen, insbesondere durch Korrosionserscheinungen, was zu negativen Einflüssen auf ein Bremsverhalten inklusive Akustik des Fahrzeugs führen kann. Gegebenenfalls sind dadurch die Reibbremsen besonders oft auszutauschen. Wird ein rekuperativer Bremsanteil zugunsten eines erhöhten hydraulischen Bremsanteils verringert, führt dies zu einer Erhöhung des Verbrauchs des Kraftfahrzeugs.

Um diesen Nachteilen beizukommen, ist es bei dem Verfahren vorgesehen, dass ein Reinigungsbedarf jeweiliger Radbremsen der Reibbremseinrichtung des Kraftfahrzeugs ermittelt wird. Dieser Reinigungsbedarf kann sich beispielsweise aufgrund einer Korrosion der jeweiligen Radbremsen ergeben. Das bedeutet, dass die jeweiligen Radbremsen zu reinigen sind, wenn sie ein gewisses Maß an Korrosionserscheinungen aufweisen. Bei dem Verfahren ist es weiterhin vorgesehen, dass anhand einer Bremspedalstellung eines von der Reibbremseinrichtung mechanisch entkoppelten Bremspedals eine vom Fahrer gewünschte Verzögerung des Kraftfahrzeugs ermittelt wird und eine für die gewünschte Verzögerung des Kraftfahrzeugs benötigte Bremskraft ermittelt wird. Die Bremspedalstellung kann beispielsweise mittels einer Sensoreinrichtung ermittelt werden. Der Fahrer kann über das Einstellen des Bremspedals somit vorgeben, wie stark das Kraftfahrzeug abgebremst werden soll. Unter der mechanischen Entkopplung des Bremspedals von der Reibbremseinrichtung ist zu verstehen, dass das Bremspedal nicht unmittelbar über die Hydraulik mit den jeweiligen Radbremsen gekoppelt ist. Das bedeutet, dass ein Verschieben von Bremsflüssigkeit unmittelbar mittels des Bremspedals in einem mit der Radbremse verbundenen Hydraulikbremskreis unterbleibt. Stattdessen wird abhängig von einer Stellung des Bremspedals ein Steuersignal erzeugt, welches einen an den Radbremsen anzulegenden Hydraulikdruck vorgibt. Dieser Hydraulikdruck wird mittels eines Aktors bei Empfangen des Steuersignals eingestellt.

Ein erster, vorgegebener Teil der für die gewünschte Verzögerung des Kraftfahrzeugs benötigten Bremskraft wird auf die Rekuperationsbremseinrichtung aufgeteilt und der Rest dieser benötigten Bremskraft wird auf die Reibbremseinrichtung aufgeteilt. Das Kraftfahrzeug wird somit sowohl von der Rekuperationsbremseinrichtung als auch von der Reibbremseinrichtung verzögert. Hierbei wird die von der Reibbremseinrichtung bereitgestellte Bremskraft in Abhängigkeit von dem ermittelten Reinigungsbedarf der jeweiligen Radbremsen auf die Radbremsen verteilt. Die Reibbremseinrichtung kann beispielsweise jeweilige hydraulische Bremsen umfassen, wobei jedem Rad des Kraftfahrzeugs eine hydraulische Bremse zugeordnet ist. Für das Aufteilen der Bremskraft auf die Radbremsen kann über eine Hydraulikflüssigkeit ein jeweiliger Bremsdruck an den Radbremsen eingestellt werden. Je höher ein jeweiliger Reinigungsbedarf einer jeweiligen Radbremse ist, desto größer ist der Anteil des Rests der benötigten Bremskraft an dieser Radbremse, um diese Radbremse durch das Anlegen der Bremskraft zu reinigen, insbesondere von Korrosionserscheinungen zu befreien. Insbesondere kann das Bremssystem in einem Reinigungsmodus betrieben werden, in welchem der Reinigungsbedarf der jeweiligen Radbremsen ermittelt wird und der Rest der benötigten Bremskraft auf die Radbremsen der Reibbremseinrichtung in Abhängigkeit von dem ermittelten Reinigungsbedarf aufgeteilt wird. Das Verfahren ermöglicht somit, dass ein besonders großer Anteil an Bremsenergie über die Rekuperationsbremseinrichtung zurückgewonnen werden kann und hierdurch das Kraftfahrzeug besonders effizient und mit einem besonders geringen Energiebedarf betrieben werden kann, und zum anderen eine gezielte Reinigung jeweiliger Radbremsen des Bremssystems durch das Aufteilen der Bremskraft ermöglicht wird. Ein Pedalgefühlsnachteil, insbesondere aufgrund jeweiliger unterschiedlicher Aufteilungen der Bremskraft auf die jeweiligen Radbremsen in Abhängigkeit von dem jeweiligen Reinigungsbedarf der Radbremsen, kann durch die mechanische Entkopplung des Bremspedals von der Reibbremseinrichtung vermieden werden. Hierdurch kann ein Fahrkomfort für Fahrzeuginsassen des Kraftfahrzeugs unabhängig von einer jeweiligen Aufteilung der Bremskraft auf die Rekuperationsbremseinrichtung sowie die Reibbremseinrichtung beziehungsweise auf die jeweiligen Radbremsen der Reibbremseinrichtung besonders hoch sein.

Bei der Erfindung ist es vorgesehen, dass die auf die Radbremsen der Reibbremseinrichtung aufgeteilte Bremskraft in Abhängigkeit von wenigstens einem vorgegebenen, einzuhaltenden Stabilitätskriterium auf die Radbremsen aufgeteilt wird. Hierbei kann das vorgegebene Stabilitätskriterium jeweilige Bereiche für Verhältnisse von an den jeweiligen Radbremsen angelegte Bremskraftanteile im Vergleich der jeweiligen Radbremsen untereinander vorgegeben. Das bedeutet, dass durch das Stabilitätskriterium vorgegeben ist, wie sehr sich die an zueinander unterschiedlichen Radbremsen angelegten Bremskraftanteile voneinander unterscheiden dürfen. Hierbei können die maximalen Unterschiede absolut oder relativ vorgegeben sein. Über das Einhalten des vorgegebenen Stabilitätskriteriums kann sichergestellt werden, dass ein Ausreißen des Fahrzeugs beim Verzögern vermieden wird. Hierdurch wird ermöglicht, dass eine Stabilität des Kraftfahrzeugs beim Verzögern besonders wenig negativ beeinflusst wird, insbesondere besonders hoch ist.

Alternativ oder zusätzlich ist es bei der Erfindung vorgesehen, dass bei einem Eingreifen eines Antiblockiersystems und/oder einer elektronischen Stabilitätskontrolle als Fahrdynamikregelsysteme in eine Fahrdynamik des Kraftfahrzeugs die Aufteilung der Bremskraft zwischen den Radbremsen durch das Fahrdynamikregelsystem vorgegeben wird. Das bedeutet, dass das jeweilige Fahrdynamikregelsystem höher priorisiert ist als die in Abhängigkeit von dem Reinigungsbedarf vorgenommene Aufteilung der benötigten Bremskraft. Sobald das jeweilige Fahrdynamikregelsystem in die Bremsung des Kraftfahrzeugs zum Stabilisieren eingreift, wird die Aufteilung der Bremskraft zwischen den Radbremsen durch das Fahrdynamikregelsystem vorgegeben. Hierbei kann das Fahrdynamiksystem absolute Werte für die jeweiligen Bremskraftanteile vorgeben und/oder Grenzwerte bzw. Eckdaten für die Aufteilung der Bremskraft vorgeben. Das Antiblockiersystem (ABS) wirkt beim Bremsen des Kraftfahrzeugs einem möglichen Blockieren der Räder durch Reduzierung des Bremsdrucks entgegen. Hierdurch wird beim Bremsen ein Erhalt einer Lenkbarkeit und Spurtreue des Kraftfahrzeugs ermöglicht. Mittels des ABS wird ein vollständiges Blockieren der Räder des Kraftfahrzeugs vermieden. Hierbei kann ein Schlupf eingestellt werden, welcher vorgibt, inwieweit jeweilige Radumdrehungen im Verhältnis zur Gesamtstrecke, die zurückgelegt wurde, abweichen. Das bedeutet, dass durch das ABS bei einem Bremsvorgang vorgegeben wird, wie weit die Räder rollen und welche Strecke die Räder beim Bremsen vollständig blockieren. Zusätzlich kann das ABS dazu eingerichtet sein, eine Bremskraftaufteilung zwischen Rädern der Vorderachse und Rädern der Hinterachse vorzunehmen. Die elektronische Stabilitätskontrolle (ESC) bezeichnet ein elektronisch gesteuertes Fahrassistenzsystem für Kraftfahrzeuge, das durch gezieltes Abbremsen einzelner Räder über die jeweiligen zugeordneten Radbremsen dem Ausbrechen des Kraftfahrzeugs entgegenwirkt. Die ESC wirkt durch gezieltes Bremsen einzelner Räder des Kraftfahrzeugs einem Schleudern des Kraftfahrzeugs im Grenzbereich in Kurven sowohl beim Übersteuern als auch beim Untersteuern entgegen, wodurch einem Fahrer des Kraftfahrzeugs eine Kontrolle über das Kraftfahrzeug gesichert werden kann. Ein Übersteuern wird durch Abbremsen eines kurvenäußeren Vorderrads, ein Untersteuern durch Abbremsen eines kurveninneren Hinterrads korrigiert. Somit gibt das ESC zum Stabilisieren des Kraftfahrzeugs jeweilige Bremskraftanteile für die Radbremsen vor. Wird beispielsweise mittels des ESC ein Ausbrechen des Kraftfahrzeugs detektiert, dann wird die in Abhängigkeit von dem Reinigungsbedarf der Radbremsen ermittelte Bremskraftaufteilung verworfen und die Bremskraft stattdessen von dem ESC auf die Radbremsen aufgeteilt. Hierfür kann das ESC eine Aufteilung der Bremskraft zwischen den Radbremsen vorgeben. Hierbei ist es möglich, dass das ESC die in Abhängigkeit von der Bremspedalstellung ermittelte benötigte Bremskraft aufteilt, oder dass von dem ESC die umzusetzende Bremskraft vorgegeben wird, welche von der in Abhängigkeit von der Bremspedalstellung ermittelten benötigten Bremskraft abweicht. Durch das Vorgeben der Bremskraftaufteilung durch das aktivierte Fahrdynamikregelsystem kann eine besonders hohe Stabilität der Fahrdynamik des Kraftfahrzeugs erreicht werden.

Alternativ oder zusätzlich ist es bei der Erfindung vorgesehen, dass als der erste vorgegebene Teil der Bremskraft eine maximal mögliche Rekuperationsleistung der Rekuperationsbremseinrichtung gewählt wird. Hierdurch wird bei der Verzögerung des Kraftfahrzeugs besonders viel Energie über Rekuperation rückgewonnen, wodurch das Kraftfahrzeug besonders effizient und verbrauchsarm betrieben werden kann. Es wird somit eine Rekuperationskapazität der Rekuperationsbremseinrichtung vollständig genutzt, um die maximal mögliche Rekuperationsleistung der Rekuperationsbremseinrichtung abzurufen.

In einer möglichen Weiterbildung des Verfahrens ist es vorgesehen, dass in Abhängigkeit von der der jeweiligen Radbremse zugeteilten Bremskraft über eine hinterlegte Zuordnungsvorschrift ein an der jeweiligen Radbremse für das Einstellen der Bremskraft anzulegender hydraulischer Bremsdruck ermittelt und dieser ermittelte Bremsdruck an der zugeordneten Radbremse angelegt wird. Als Zuordnungsvorschrift kann für jede Radbremse ein Kennfeld hinterlegt und somit gespeichert sein, in welchem ein Zusammenhang zwischen dem jeweiligen an der Radbremse angelegten hydraulischen Bremsdruck und der an der jeweiligen Radbremse in Form eines Bremsmoments resultierenden Bremskraft vorgegeben ist. Folglich wird ermittelt, welcher Bremskraftanteil der für die gewünschte Verzögerung benötigten Bremskraft aufgrund der Aufteilung an der jeweiligen Radbremse anzulegen ist. Über die Zuordnungsvorschrift wird ermittelt, welcher hydraulische Bremsdruck an dieser Radbremse anzulegen ist, um zu bewirken, dass der ermittelte Bremskraftanteil an dieser Radbremse wirkt. Anschließend wird dieser ermittelte hydraulische Bremsdruck an der zugeordneten Radbremse angelegt. Für die Aufteilung des für die Reibbremseinrichtung vorgesehenen Rests der benötigten Bremskraft auf die Radbremsen werden anhand des jeweiligen Reinigungsbedarfs jeweilige Radbremsen ausgewählt und den ausgewählten Radbremsen ihr jeweiliger Bremskraftanteil zugewiesen. Die Summe der Bremskraftanteile sämtlicher ausgewählter Radbremsen mit dem ersten, der Rekuperationsbremseinrichtung zugewiesenen Teil der benötigten Bremskraft entspricht der gesamten für die gewünschte Verzögerung des Kraftfahrzeugs benötigten Bremskraft. Über die Zuordnungsvorschrift kann mit besonders genau ermittelt werden, welcher hydraulische Bremsdruck an der jeweiligen Radbremse anzulegen ist, um zu bewirken, dass an dieser Radbremse der für die Radbremse vorgegebene Bremskraftanteil wirkt. Dieser hydraulische Bremsdruck kann mittels eines Aktors an der jeweiligen Radbremse eingestellt werden. Hierdurch wird ermöglicht, dass das Bremspedal mechanisch von der Einstellung des hydraulischen Bremsdrucks an den jeweiligen Radbremsen entkoppelt ist. Infolgedessen sind für eine fixe benötigte Bremskraft eine Bremspedalstellung und ein Bremspedalwiderstand des Bremspedals unabhängig von der Aufteilung der Bremskraft zwischen der Reibbremseinrichtung und der Rekuperationsbremseinrichtung sowie unabhängig von einer Aufteilung der Bremskraft zwischen den jeweiligen Radbremsen. Für jeweilige unterschiedliche Aufteilungen der benötigten Bremskraft kann somit der Fahrer keine Unterschiede am Bremspedal fühlen. Folglich besteht kein Pedalgefühlsnachteil.

In diesem Zusammenhang kann es in einer möglichen Weiterbildung des Verfahrens vorgesehen sein, dass das wenigstens eine Stabilitätskriterium eingehalten ist, wenn die den Radbremsen zugeordnete jeweilige Bremskraft höchstens einer maximalen Bremskraft für die jeweilige Radbremse entspricht und/oder ein Bremskraftverhältnis zwischen jeweiligen Radbremsen innerhalb eines zugelassenen Bereichs für dieses Bremskraftverhältnis liegt. Mit anderen Worten können Applikationsparameter vorgegeben werden, welche Grenzwerte bzw. Eckdaten für die Bremskraftverteilung auf die Radbremsen vorgeben. Für jede Radbremse kann eine individuelle maximale Bremskraft vorgegeben sein oder es kann eine maximale Bremskraft vorgegeben sein, welche für jede der Radbremsen einzuhalten ist. Der zugelassene Bereich für das Bremskraftverhältnis zwischen den jeweiligen Radbremsen gibt vor, wie sehr sich die jeweiligen Bremskraftanteile der einzelnen Radbremsen voneinander unterscheiden dürfen. Bei zu starken Differenzen zwischen den jeweiligen an den Radbremsen angelegten Bremskraftanteilen kann eine Fahrdynamik des Kraftfahrzeugs negativ beeinflusst werden. Durch diese Beeinflussung der Fahrdynamik kann das Kraftfahrzeug ausbrechen oder von einer Fahrspur abgebracht werden. Durch das Einhalten des Stabilitätskriteriums wird ein besonders sicheres Betreiben des Kraftfahrzeugs ermöglicht.

In einer weiteren möglichen Ausgestaltung der Erfindung ist es vorgesehen, dass bei einem Eingreifen des Antiblockiersystems und/oder der elektronischen Stabilitätskontrolle als Fahrdynamikregelsysteme in eine Fahrdynamik des Kraftfahrzeugs die Aufteilung der Bremskraft zwischen der Rekuperationsbremseinrichtung und der Reibbremseinrichtung durch das Fahrdynamikregelsystem vorgegeben wird. Das bedeutet, dass das jeweilige Fahrdynamikregelsystem höher priorisiert ist als die in Abhängigkeit von dem Reinigungsbedarf vorgenommene Aufteilung der benötigten Bremskraft. Sobald das jeweilige Fahrdynamikregelsystem in die Bremsung des Kraftfahrzeugs zum Stabilisieren eingreift, wird die Aufteilung der Bremskraft zwischen der Rekuperationsbremseinrichtung und der Reibbremseinrichtung durch das Fahrdynamikregelsystem vorgegeben. Hierbei kann das Fahrdynamiksystem absolute Werte für die jeweiligen Bremskraftanteile vorgeben und/oder Grenzwerte bzw. Eckdaten für die Aufteilung der Bremskraft vorgeben. Wird beispielsweise mittels des ESC ein Ausbrechen des Kraftfahrzeugs detektiert, dann wird die in Abhängigkeit von dem Reinigungsbedarf der Radbremsen ermittelte Bremskraftaufteilung verworfen und die Bremskraft stattdessen von dem ESC auf die Radbremsen aufgeteilt. Hierfür kann das ESC eine Aufteilung der Bremskraft zwischen der Rekuperationsbremseinrichtung und der Reibbremseinrichtung vorgeben. Hierbei ist es möglich, dass das ESC die in Abhängigkeit von der Bremspedalstellung ermittelte benötigte Bremskraft aufteilt, oder dass von dem ESC die umzusetzende Bremskraft vorgegeben wird, welche von der in Abhängigkeit von der Bremspedalstellung ermittelten benötigten Bremskraft abweicht. Durch das Vorgeben der Bremskraftaufteilung durch das aktivierte Fahrdynamikregelsystem kann eine besonders hohe Stabilität der Fahrdynamik des Kraftfahrzeugs erreicht werden.

In einer Weiterbildung der Erfindung ist es vorgesehen, dass die auf die Radbremsen aufgeteilte Bremskraft gleichmäßig auf alle Radbremsen verteilt wird, wenn festgestellt wird, dass kein Reinigungsbedarf besteht. Mit anderen Worten wird für jede der Radbremsen ein jeweiliger Bremskraftanteil vorgesehen, welcher für alle Radbremsen gleich ist. Hierdurch kann ein besonders gleichmäßiges Verzögern des Kraftfahrzeugs erreicht werden und eine Gefahr eines Verziehens des Kraftfahrzeugs bei der Bremsung besonders gering gehalten werden.

Es kann in diesem Zusammenhang in einer möglichen Weiterbildung der Erfindung vorgesehen sein, dass, falls die für die vorgegebene Verzögerung des Kraftfahrzeugs benötigte Bremskraft kleiner oder gleich der maximal möglichen Rekuperationsleistung der Rekuperationsbremseinrichtung ist und der Reinigungsbedarf ermittelt worden ist, als der erste vorgegebene Teil der Bremskraft eine niedrigere Rekuperationsleistung als die maximal mögliche Rekuperationsleistung der Rekuperationsbremseinrichtung gewählt wird und der Rest der benötigten Bremskraft auf die Reibbremseinrichtung aufgeteilt wird. Ist die für die vorgegebene Verzögerung des Kraftfahrzeugs benötigte Bremskraft kleiner oder gleich der maximal möglichen Rekuperationsleistung der Rekuperationsbremseinrichtung und würde als der erste vorgegebene Teil der Bremskraft die maximal mögliche Rekuperationsleistung der Rekuperationsbremseinrichtung gewählt werden, dann wäre die für die Reibbremseinrichtung zur Verfügung stehende Bremskraft gleich 0. Somit könnte eine Reinigung der Radbremsen der Reibbremseinrichtung nicht stattfinden. Aus diesem Grund wird, sobald der Reinigungsbedarf ermittelt worden ist, als der erste vorgegebene Teil der Bremskraft die Rekuperationsleistung niedriger als die maximal mögliche Rekuperationsleistung der Rekuperationsbremseinrichtung gewählt, sofern die für die vorgegebene Verzögerung des Kraftfahrzeugs benötigte Bremskraft kleiner oder gleich der maximal möglichen Rekuperationsleistung ist. Ist die für die vorgegebene Verzögerung des Kraftfahrzeugs benötigte Bremskraft größer als die maximal mögliche Rekuperationsleistung der Rekuperationsbremseinrichtung, dann kann als der erste vorgegebene Teil der Bremskraft die maximal mögliche Rekuperationsleistung der Rekuperationsbremseinrichtung gewählt werden. Mit anderen Worten erfolgt eine Fallunterscheidung. Wird festgestellt, dass eine Rekuperationsverzögerung alleine für das vorgegebene Verzögern des Kraftfahrzeugs ausreicht, jedoch wenigstens eine der Radbremsen verschmutzt ist und somit den Reinigungsbedarf aufweist, dann wird weniger über die Rekuperationsbremseinrichtung verzögert als über die maximal mögliche Rekuperationsleistung der Rekuperationsbremseinrichtung möglich wäre, wobei das Kraftfahrzeug zusätzlich über eine hydraulische Bremsung mittels der Reibbremseinrichtung verzögert wird. In einem zweiten Fall ist die Rekuperationsverzögerung nicht ausreichend, um das Kraftfahrzeug um die vorgegebene Verzögerung abzubremsen, wobei der Rest der benötigten Bremskraft durch die Reibbremseinrichtung bereitgestellt wird, wobei in Abhängigkeit von dem jeweiligen Reinigungsbedarf der jeweiligen Radbremsen diese Bremskraft auf die Radbremsen verteilt wird. Ein Rekuperationsziel des Verfahrens ist es, einen besonders großen Anteil an Bremskraft über Rekuperationsleistung rückgewinnen zu können. Um dieses Rekuperationsziel zu erreichen, wird die Aufteilung der Bremskraft zwischen der Reibbremseinrichtung und der Rekuperationsbremseinrichtung vorgenommen, wobei zusätzlich zu einem Reinigen wenigstens einer Radbremse so viel Bremskraft wie möglich über die Rekuperationsbremseinrichtung zurückgewonnen werden soll. Hierdurch kann das Kraftfahrzeug besonders energieeffizient betrieben werden.

In weiterer möglicher Ausgestaltung der Erfindung ist es vorgesehen, dass ein größerer Anteil der Bremskraft der Reibbremseinrichtung auf Radbremsen sämtlicher Hinterräder des Kraftfahrzeugs verteilt wird im Vergleich zu Radbremsen sämtlicher Vorderräder. Handelt es sich bei dem Kraftfahrzeug um ein Kraftrad, dann ist es möglich, dass der größere Anteil der Bremskraft der Reibbremseinrichtung auf die Radbremse des Hinterrads des Kraftrads aufgeteilt wird im Vergleich zu der Radbremse des Vorderrads des Kraftrads. Handelt es sich jedoch bei dem Kraftfahrzeug um einen Kraftwagen, dann ist es vorgesehen, dass der größere Anteil der Bremskraft der Reibbremseinrichtung auf die Radbremsen beider Hinterräder des Kraftfahrzeugs verteilt wird im Vergleich zu den Radbremsen der Vorderräder. Insbesondere Scheibenbremsen an einer Hinterachse des Kraftfahrzeugs weisen einen besonders großen Reinigungsbedarf auf, da sie im normalen Kundenbetrieb einen geringeren Energieeintrag erfahren als Vorderradbremsen. Durch das Aufteilen des größeren Anteils der Bremskraft der Reibbremseinrichtung auf die Radbremsen sämtlicher Hinterräder des Kraftfahrzeugs im Vergleich zu den Radbremsen der Vorderräder des Kraftfahrzeugs kann ein zuverlässiges Reinigen der Radbremsen jeweiliger Hinterräder des Kraftfahrzeugs erfolgen.

Es ist in einer weiteren möglichen Ausgestaltung der Erfindung vorgesehen, dass der Reinigungsbedarf der jeweiligen Radbremsen über ein Modell in Abhängigkeit von an den jeweiligen Radbremsen angelegtem Bremsdruck und Bremshäufigkeit, insbesondere von an den jeweiligen Radbremsen über deren Lebensdauer angelegtem Bremsdruck und Bremshäufigkeit, ermittelt wird. Bei dem Modell kann es sich somit um eine Art Energierechner handeln, welcher über eine Laufzeit der jeweiligen Radbremsen mitrechnen kann, wann und an welcher Radbremse für wie lange aufgrund eines jeweiligen Bremskrafteintrags einer jeweiligen Radbremse gebremst worden ist und wie dementsprechend eine Korrosionsentwicklung an den jeweiligen Radbremsen verläuft. Über das Modell kann somit besonders gut abgeschätzt werden, wie sich ein jeweiliger Reinigungsbedarf der jeweiligen Radbremsen über deren Lebensdauer entwickelt. Somit werden vorteilhafterweise keine zusätzlichen Sensoren für das Ermitteln des jeweiligen Reinigungsbedarfs der jeweiligen Radbremsen benötigt. In dem Modell können jeweilige Bremsvorgänge an den Radbremsen genau aufgelöst hinsichtlich Dauer und/oder Bremsdruck hinterlegt werden, wodurch über das Modell für die jeweiligen Radbremsen der Reinigungsbedarf mit besonders großer Genauigkeit ermittelt werden kann.

Es ist in einer weiteren möglichen Ausgestaltung der Erfindung vorgesehen, dass die mittels der Reibbremseinrichtung an einer jeweiligen Radbremse anzulegende Bremskraft umso höher eingestellt wird, je höher der jeweilige ermittelte Reinigungsbedarf an dieser Radbremse ist. Durch die an die jeweilige Radbremse angelegte Bremskraft kann diese Radbremse abgeschliffen werden, wobei ein Schleifeffekt höher ist, je höher die an diese Radbremse angelegte Bremskraft ist. Das bedeutet, dass für ein besonders gutes Abschleifen von beispielsweise Korrosionserscheinungen eine besonders hohe Bremskraft an diese zu säubernde Radbremse angelegt wird. Es kann somit eine besonders gute Reinigungswirkung durch das Anlegen der Bremskraft an der jeweiligen Radbremse erreicht werden.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur ein Verfahrensschema für ein Verfahren zum Betreiben eines Bremssystems eines Kraftfahrzeugs.

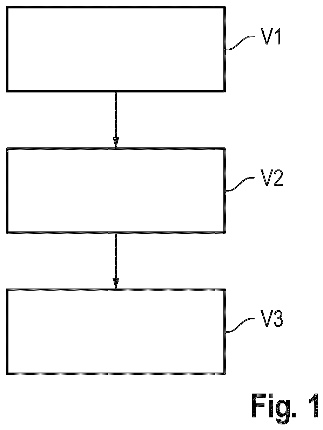

Die Zeichnung zeigt in Fig. 1 ein Verfahrensschema für ein Verfahren zum Betreiben eines Bremssystems eines Kraftfahrzeugs, wobei das Bremssystem eine Reibbremseinrichtung und eine Rekuperationsbremseinrichtung umfasst. Die Reibbremseinrichtung ist dazu eingerichtet, über jeweilige Reibbremsen, welche jeweiligen Rädern des Kraftfahrzeugs zugeordnet sind und im Folgenden als Radbremsen bezeichnet werden, das Kraftfahrzeug zu verzögern. Die Rekuperationsbremseinrichtung ist dazu eingerichtet, das Kraftfahrzeug zu verzögern, wobei kinetische Energie des Kraftfahrzeugs bei der Verzögerung über die Rekuperationsbremseinrichtung in elektrische Energie umgewandelt wird, welche wiederum in eine Batterie des Kraftfahrzeugs eingespeichert werden kann. Hierdurch kann das Kraftfahrzeug mit der in die Batterie des Kraftfahrzeugs mittels der Rekuperationsbremseinrichtung rückgespeicherten Energie besonders energieeffizient angetrieben werden.

Bei dem Verfahren ist es in einem ersten Verfahrensschritt V1 vorgesehen, dass ein Reinigungsbedarf jeweiliger Radbremsen der Reibbremseinrichtung des Kraftfahrzeugs ermittelt wird. Hierbei kann der Reinigungsbedarf der jeweiligen Radbremsen insbesondere über ein Modell in Abhängigkeit von an den jeweiligen Radbremsen angelegtem Bremsdruck und Bremshäufigkeit bei jeweiligen Bremsereignissen insbesondere über eine Lebensdauer der Radbremsen ermittelt werden.

In einem zweiten Verfahrensschritt V2 des Verfahrens ist es vorgesehen, dass eine für eine von einem Fahrer gewünschte Verzögerung des Kraftfahrzeugs benötigte Bremskraft ermittelt wird. Hierfür wird eine Bremspedalstellung eines von der Reibbremseinrichtung mechanisch entkoppelten Bremspedals analysiert und die gewünschte Verzögerung in Abhängigkeit von der ermittelten Bremspedalstellung ermittelt. Der Fahrer kann somit über ein Drücken des Bremspedals in unterschiedliche Bremspedalstellungen vorgeben, wie stark das Kraftfahrzeug verzögert werden soll. Bei dem Verfahren wird somit ermittelt, wie stark das Kraftfahrzeug gemäß dem Wunsch des Fahrers zu verzögern ist und welche Bremskraft notwendig ist, um diese Verzögerung des Kraftfahrzeugs hervorzurufen. Durch das Entkoppeln des Bremspedals von der Reibbremseinrichtung wird vermieden, dass der Fahrer über einen Widerstand des Bremspedals eine Aufteilung der Bremskraft auf jeweilige Radbremsen der Reibbremseinrichtung erfühlen kann. Aufgrund der Entkopplung des Bremspedals von der Reibbremseinrichtung ist ein Bremspedalwiderstand für den Fahrer bei einer durch die Bremspedalstellung charakterisierten, gewünschten Verzögerung für jede Aufteilung der Bremskraft gleich. Es besteht somit kein sogenannter Pedalgefühlsnachteil.

In einem dritten Verfahrensschritt V3 des Verfahrens ist vorgesehen, dass ein erster, vorgegebener Teil dieser für die gewünschte Verzögerung des Kraftfahrzeugs benötigten Bremskraft auf die Rekuperationsbremseinrichtung aufgeteilt wird und der Rest der benötigen Bremskraft auf die Reibbremseinrichtung aufgeteilt wird. Hierbei wird der von der Reibbremseinrichtung bereitgestellte Teil der Bremskraft in Abhängigkeit von dem ermittelten Reinigungsbedarf der jeweiligen Radbremsen auf die Radbremsen verteilt.

Als der erste vorgegebene Teil der Bremskraft wird insbesondere eine maximal mögliche Rekuperationsleistung der Rekuperationsbremseinrichtung gewählt, um besonders viel von der Bremsenergie rückgewinnen zu können, um dadurch das Kraftfahrzeug besonders energieeffizient betreiben zu können. Ist die für die vorgegebene Verzögerung des Kraftfahrzeugs benötigte Bremskraft kleiner oder gleich der maximal möglichen Rekuperationsleistung der Rekuperationsbremseinrichtung und ist weiterhin der Reinigungsbedarf für wenigstens eine Radbremse der Reibbremseinrichtung ermittelt worden, dann wird als der erste vorgegebene Teil der Bremskraft eine niedrigere Rekuperationsleistung als die maximal mögliche Rekuperationsleistung der Rekuperationsbremseinrichtung gewählt und der Rest der benötigten Bremskraft auf die jeweiligen Radbremsen der Reibbremseinrichtung aufgeteilt. Hierbei kann, je höher der jeweilige ermittelte Reinigungsbedarf einer jeweiligen Radbremse ist, desto mehr Bremskraft auf diese Radbremse angelegt werden, um diese Radbremse von ihrer Verunreinigung freizuschleifen. Um eine Stabilität des Kraftfahrzeugs bei einem Bremsvorgang nicht zu gefährden, kann der auf die Radbremsen aufzuteilende Rest der Bremskraft in Abhängigkeit von einem vorgegebenen Stabilitätskriterium auf die Radbremsen aufgeteilt werden. Hierbei kann vorgegeben sein, dass das Stabilitätskriterium eingehalten ist, wenn die den Radbremsen zugeordnete jeweilige Bremskraft höchstens einer maximalen Bremskraft für die jeweilige Radbremse entspricht und/oder ein Bremskraftverhältnis zwischen jeweiligen Radbremsen innerhalb eines zugelassenen Bereichs für dieses Bremskraftverhältnis liegt. Weiterhin kann es vorgesehen sein, dass bei einem Eingreifen eines Antiblockiersystems und/oder einer elektronischen Stabilitätskontrolle als Fahrdynamikregelsysteme in eine Fahrdynamik des Kraftfahrzeugs die Aufteilung der Bremskraft zwischen der Rekuperationsbremseinrichtung und der Reibbremseinrichtung und/oder zwischen den Radbremsen durch das Fahrdynamikregelsystem vorgegeben wird.

Ein größerer Anteil der Bremskraft der Reibbremseinrichtung kann auf Radbremsen sämtlicher Hinterräder des Kraftfahrzeugs verteilt werden im Vergleich zu Radbremsen jeweiliger Vorderräder des Kraftfahrzeugs. Wird festgestellt, dass kein Reinigungsbedarf jeweiliger Radbremsen besteht, dann kann die auf die Radbremsen aufzuteilende Bremskraft gleichmäßig auf alle Radbremsen verteilt werden.

Bei dem Verfahren wird somit bei einer manuellen Bremsung, bei welcher der Fahrer des Kraftfahrzeugs über die jeweilige Bremspedalstellung vorgibt, wie stark das Kraftfahrzeug verzögert werden soll, ein hydraulischer Anteil des Bremsmoments, insbesondere der für die gewünschte Verzögerung des Kraftfahrzeugs benötigen Bremskraft, gezielt und innerhalb von Stabilitätsgrenzen des Kraftfahrzeugs auf Achsen beziehungsweise speziell auf einzelne Räder, insbesondere die den Räder zugeordneten Radbremsen des Kraftfahrzeugs, verteilt. Hierdurch soll ein Energieeintrag an den zuschleifenden Radbremsen und damit die Schleifwirkung erhöht werden. Hierdurch ist es möglich, auch einen geringen hydraulischen Bremsmomentanteil, insbesondere bei Bremsungen mit rekuperativem Anteil, zielgerichtet an einer Achse beziehungsweise an definierten Rädern des Kraftfahrzeugs unabhängig von einer konstruktiven Bremskraftverteilung abzusetzen. Negative Einflüsse auf ein Pedalgefühl können durch Verwendung eines entkoppelten Bremssystems vermieden werden, da hierbei das Bremspedal von der Reibbremseinrichtung mechanisch entkoppelt ist. Bei diesem entkoppelten Bremssystem kann es sich um ein einen Wegsimulator umfassendes Simulatorsystem handeln, welches beispielsweise als 1-Box-System ausgebildet sein kann. Die Bezeichnung 1-Box-System beschreibt den Aufbau des Bremssystems, wobei sämtliche Komponenten des Bremssystems in einem gemeinsamen Gehäuse und somit in einer Box aufgenommen sind. Hierbei kann das Bremspedal unmittelbar mit dieser Box verbunden sein. In dem gemeinsamen Gehäuse können ein elektromechanischer Bremskraftverstärker, eine elektronische Stabilitätskontrolle und ein Bremsflüssigkeitsspeicher angeordnet sein. Das Simulatorsystem beschreibt eine mögliche Form der mechanischen Entkopplung des Bremspedals von der Reibbremseinrichtung. Mittels des Bremspedals verschobene Bremsflüssigkeit kann in den Bremsflüssigkeitsspeicher umgeleitet werden, welcher auch als Simulator bezeichnet werden kann. Hierdurch wird vermieden, dass unmittelbar mittels des Bremspedals Bremsflüssigkeit in die Radbremsen verschoben wird. Stattdessen wird der Bremsdruck in den jeweiligen Radbremsen mittels eines separaten Motors über jeweilige Hydraulikleitungen aufgebaut.

Bei einem gekoppelten Bremssystem mit einem Unterdruck-Bremskraftverstärker oder einem elektromechanischen Bremskraftverstärker ändert sich durch die Verteilung der Bremskraft auf ausgewählte Räder ein Bremspedalgefühl stark. Das Bremspedalgefühl wird durch ein Verhältnis von Bremspedalweg bzw. Bremspedalkraft zu Verzögerung des Kraftfahrzeugs bestimmt. Durch ein hydraulisches Wegschalten einzelner Räder beim Bremsvorgang mit dem gekoppelten Bremssystem muss der Fahrer weniger Volumen an Bremsflüssigkeit verschieben, um einen vorgegebenen Druck in den verbliebenen Radbremsen zu erzeugen, aufgrund einer in diesem Fall steileren Weg-Druck-Kennlinie. In dem Fall wird andererseits die vorgegebene Verzögerung nicht erreicht, da ein jeweils erzeugtes Bremsmoment insgesamt an weniger Rädern wirkt.

Bei dem entkoppelten Bremssystem, bei welchem es sich insbesondere um ein Brake-by-Wire-Bremssystem handeln kann, ist ein Weg-zu-Kraft-Verlauf bei Betätigen des Bremspedals unabhängig von hydraulischen Verhältnissen in der Reibbremseinrichtung durch mechanische Auslegung vorgegeben. Die Verzögerung zu der jeweiligen Bremspedalstellung wird durch einen vom Bremspedal entkoppelten Drucksteller in der Reibbremseinrichtung ausgelöst und kann durch Softwarefunktionen im Bremssystem applizierbar vorgegeben werden.

Das Verfahren ermöglicht, dass ein Bremspedalgefühl und damit ein Bremspedalweg-Verzögerungsverhalten so angepasst werden, dass dieses einem vom Fahrer erwarteten normalen Verzögerungsverhalten entsprechend einem Verzögerungsverhalten ohne aktive Bremsmomentverteilung auf einzelne Räder bzw. einem Bremsen über alle Räder des Kraftfahrzeugs entspricht. Hierfür können in einem Steuergerät des Bremssystems für jede Radbremse Kennlinien und/oder Kennfelder hinterlegt sein, welche ein zu einem eingestellten Bremsdruck sich einstellendes Bremsmoment am Rad abbilden. Mittels einer Funktion im Steuergerät kann die Bremspedalstellung, welche einen Fahrerwunsch repräsentiert, eingelesen werden und ein Wunsch-Summenradbremsmoment ermittelt werden. Dieses Wunsch-Summenradbremsmoment ergibt sich aus einem applizierten Standard-Bremspedalweg-Verzögerungsverhalten für eine Bremsung des Kraftfahrzeugs über alle Räder, also ohne funktionalen Eingriff. Sind bei diesem Bremsvorgang nun einzelne Räder oder Achsen hydraulisch abgetrennt, dann ermittelt die Funktion anhand der hinterlegten Kennlinien für jede Radbremse einen jeweils anzulegenden Bremsdruck, aus welchen an den aktiven Radbremsen das Wunsch-Summenradbremsmoment resultiert. Dieser anzulegende Bremsdruck wird an den jeweiligen Radbremsen mittels eines Druckstellers der Reibbremseinrichtung eingestellt. Damit ist das Bremspedalweg-Verzögerungsverhalten gleich dem Standard-Bremspedalweg-Verzögerungsverhalten und die aktive Funktion für den Fahrer nicht bzw. kaum spürbar.

Bei dem Verfahren wird der Bremsdruck in der Reibbremseinrichtung gemessen bzw. berechnet. Für die Funktion können Applikationsparameter vorgegeben werden, welche definieren, welche Radbremsen und/oder Achsen getrennt werden dürfen und/oder bis zu welchen Verzögerungen die jeweiligen Radbremsen und/oder Achsen getrennt werden dürfen. Durch die beschriebene Funktion soll eine Fahrzeugstabilität sowie eine Fahrzeugsicherheit besonders wenig beeinträchtigt werden. Aus diesem Grund weisen Fahrzeugstabilitätsfunktionen bzw. Fahrzeugsicherheitsfunktionen eine höhere Priorität auf. Soll die Funktion beendet werden und wieder über alle Radbremsen gebremst werden, dann werden die entsprechenden Radbremsen über entsprechende Ventile freigeschalten und der Bremsdruck über den Drucksteller entsprechend dem Wunsch-Summenradbremsmoment an allen Rädern des Kraftfahrzeugs angepasst. Die Funktion kann bedarfsabhängig aktiviert werden und somit abhängig von einem geschätzten Zustand der Radbremsen.

Aufgrund des gezielten Verteilens des hydraulischen Bremsmomentanteils, insbesondere bei Bremsvorgängen mit rekuperativem Anteil, auf einzelne Achsen beziehungsweise Räder, insbesondere den diesen Achsen beziehungsweise den diesen Rädern zugeordneten Radbremsen, kann ein Verbrauchsnachteil vermieden werden. Weiterhin kann durch den Einsatz dieser Funktion bei manuellen Bremsvorgängen ein Pedalgefühlsnachteil vermieden werden. Zur Ermittlung und Verteilung des hydraulischen Bremsmoments kann ein Algorithmus herangezogen werden. Dieser Algorithmus dient einer Anpassung der Verzögerung des Kraftfahrzeugs in Abhängigkeit von dem Fahrerbremswunsch und den jeweils aktiven Radbremsen, damit das Bremspedalgefühl für den Fahrer für einen gegebenen Fahrerbremswunsch unabhängig von den jeweiligen aktiven Radbremsen gleich bleibt.

In einem Bremsregelsystem-Steuergerät und somit der Steuereinrichtung des Bremssystems des Kraftfahrzeugs kann ein Fahrerbremswunschmoment in einen generatorischen und einen hydraulischen Anteil aufgeteilt werden, je nach Höhe eines verfügbaren hydraulischen Generatormoments. Anschließend kann der hydraulische Anteil auf die den Achsen beziehungsweise den Rädern zugeordneten Radbremsen verteilt werden, welche potentiell einen höchsten Reinigungsbedarf haben und somit einen höchsten Bedarf haben, geschliffen zu werden. Bei dem Verfahren wird anhand des Fahrerbremswunsches ein zu einer Bremsung über alle Räder äquivalentes Wunsch-Summenradbremsmoment ermittelt und anhand hinterlegter Kennlinien ein zur Bremsung über die ausgewählten Räder bzw. Achsen entsprechender Bremsdruck berechnet. Dieser Bremsdruck wird über die Druckstelleinheit in der Reibbremseinrichtung eingestellt. Insbesondere erfolgt die Aufteilung des Rests der benötigten Bremskraft auf die Radbremsen der Reibbremseinrichtung für einen Fahrer des Kraftfahrzeugs unmerklich, wobei eine Stabilität des Kraftfahrzeugs besonders wenig, insbesondere gar nicht, beeinflusst wird. Der Reinigungsbedarf der jeweiligen Radbremsen kann anhand eines Algorithmus ermittelt werden, welcher eine eingetragene Energie je Radbremse aufsummieren kann. Grundsätzlich weisen Scheibenbremsen an einer Hinterachse einen höheren Bedarf auf, von Verunreinigungen, insbesondere von Korrosionserscheinungen, gereinigt zu werden, da sie im normalen Kundenbetrieb einen geringeren Energieeintrag erfahren als Vorderachsbremsen.

Insgesamt zeigt die Erfindung, wie eine Funktion zur Verbesserung von Reibeigenschaften jeweiliger Radbremsen bei Fahrzeugen mit entkoppelten Bremssystemen erreicht werden kann.

### Bezugszeichenliste

- V1 bis V3: jeweilige Verfahrensschritte

## Patentansprüche

1. Verfahren zum Betreiben eines Bremssystems eines Kraftfahrzeugs, mit einer Reibbremseinrichtung und einer Rekuperationsbremseinrichtung, bei welchem ein Reinigungsbedarf jeweiliger Radbremsen der Reibbremseinrichtung des Kraftfahrzeugs ermittelt wird (V1), anhand einer Bremspedalstellung eines von der Reibbremseinrichtung mechanisch entkoppelten Bremspedals eine vom Fahrer gewünschte Verzögerung des Kraftfahrzeugs ermittelt wird und eine für die gewünschte Verzögerung des Kraftfahrzeugs benötigte Bremskraft ermittelt wird (V2), wobei ein erster, vorgegebener Teil dieser Bremskraft auf die Rekuperationsbremseinrichtung aufgeteilt wird und der Rest der benötigten Bremskraft auf die Radbremsen der Reibbremseinrichtung aufgeteilt wird (V3), wobei die von der Reibbremseinrichtung bereitzustellende Bremskraft in Abhängigkeit von dem ermittelten Reinigungsbedarf der jeweiligen Radbremsen auf die Radbremsen verteilt wird, wobei
- die auf die Radbremsen der Reibbremseinrichtung aufgeteilte Bremskraft in Abhängigkeit von wenigstens einem vorgegebenen, einzuhaltenden Stabilitätskriterium auf die Radbremsen aufgeteilt wird, und/oder
- bei einem Eingreifen eines Antiblockiersystems und/oder einer elektronischen Stabilitätskontrolle als Fahrdynamikregelsysteme in eine Fahrdynamik des Kraftfahrzeugs die Aufteilung der Bremskraft zwischen den Radbremsen durch das Fahrdynamikregelsystem vorgegeben wird, und/oder
- als der erste vorgegebene Teil der Bremskraft eine maximal mögliche Rekuperationsleistung der Rekuperationsbremseinrichtung gewählt wird.

2. Verfahren nach Anspruch 1, wobei in Abhängigkeit von der der jeweiligen Radbremse zugeteilten Bremskraft über eine hinterlegte Zuordnungsvorschrift ein an der jeweiligen Radbremse für das Einstellen der Bremskraft anzulegender hydraulischer Bremsdruck ermittelt und dieser ermittelte Bremsdruck an der zugeordneten Radbremse angelegt wird.

3. Verfahren nach einem der vorhergehenden Ansprüche, wobei das wenigstens eine Stabilitätskriterium eingehalten ist, wenn die den Radbremsen zugeordnete jeweilige Bremskraft höchstens einer maximalen Bremskraft für die jeweilige Radbremse entspricht und/oder ein Bremskraftverhältnis zwischen jeweiligen Radbremsen innerhalb eines zugelassenen Bereichs für dieses Bremskraftverhältnis liegt.

4. Verfahren nach einem der vorhergehenden Ansprüche, wobei bei einem Eingreifen des Antiblockiersystems und/oder der elektronischen Stabilitätskontrolle als Fahrdynamikregelsysteme in eine Fahrdynamik des Kraftfahrzeugs die Aufteilung der Bremskraft zwischen der Rekuperationsbremseinrichtung und der Reibbremseinrichtung durch das Fahrdynamikregelsystem vorgegeben wird.

5. Verfahren nach einem der vorhergehenden Ansprüche, wobei die auf die Radbremsen aufgeteilte Bremskraft gleichmäßig auf alle Radbremsen verteilt wird, wenn festgestellt wird, dass kein Reinigungsbedarf besteht.

6. Verfahren nach einem der vorhergehenden Ansprüche, wobei falls die für die vorgegebene Verzögerung des Kraftfahrzeugs benötigte Bremskraft kleiner oder gleich der maximal möglichen Rekuperationsleistung der Rekuperationsbremseinrichtung ist und der Reinigungsbedarf ermittelt worden ist, als der erste vorgegebene Teil der Bremskraft eine niedrigere Rekuperationsleistung als die maximal mögliche Rekuperationsleistung der Rekuperationsbremseinrichtung gewählt wird und der Rest der benötigten Bremskraft auf die Reibbremseinrichtung aufgeteilt wird.

7. Verfahren nach einem der vorhergehenden Ansprüche, wobei ein größerer Anteil der Bremskraft der Reibbremseinrichtung auf Radbremen sämtlicher Hinterräder des Kraftfahrzeugs verteilt wird im Vergleich zu Radbremsen sämtlicher Vorderräder.

8. Verfahren nach einem der vorhergehenden Ansprüche, wobei der Reinigungsbedarf der jeweiligen Radbremsen über ein Modell in Abhängigkeit von an den jeweiligen Radbremsen angelegtem Bremsdruck und Bremshäufigkeit, insbesondere von an den jeweiligen Radbremsen über deren Lebensdauer angelegtem Bremsdruck und Bremshäufigkeit, ermittelt wird.

9. Verfahren nach einem der vorhergehenden Ansprüche, wobei die mittels der Reibbremseinrichtung an einer jeweiligen Radbremse anzulegende Bremskraft umso höher eingestellt wird, je höher der jeweilige ermittelte Reinigungsbedarf an dieser Radbremse ist.

## Claims

1. Method for operating a braking system of a motor vehicle, having a friction brake device and a regenerative brake device, in which method a cleaning requirement of respective wheel brakes of the friction brake device of the motor vehicle is determined (V1), and, on the basis of a brake pedal position of a brake pedal mechanically decoupled from the friction brake device, a deceleration of the motor vehicle desired by the driver is determined and a braking force required for the desired deceleration of the motor vehicle is determined (V2), wherein a first, predetermined part of this braking force is distributed to the regenerative brake device and the remainder of the required braking force is distributed to the wheel brakes of the friction brake device (V3), wherein the braking force to be provided by the friction brake device is distributed to the wheel brakes depending on the determined cleaning requirement of the respective wheel brakes, wherein
- the braking force distributed to the wheel brakes of the friction brake device is distributed to the wheel brakes depending on at least one predetermined stability criterion to be met, and/or
- when an anti-lock braking system and/or an electronic stability control system as driving dynamics control systems intervene in the driving dynamics of the motor vehicle, the distribution of the braking force between the wheel brakes is predetermined by the driving dynamics control system, and/or
- as the first predetermined part of the braking force, a maximum possible regenerative power of the regenerative brake device is selected.

2. Method according to claim 1, wherein, depending on the braking force assigned to the particular wheel brake, a hydraulic braking pressure to be applied to the particular wheel brake for adjusting the braking force is determined via a stored allocation rule and this determined braking pressure is applied to the assigned wheel brake.

3. Method according to either of the preceding claims, wherein the at least one stability criterion is met if the particular braking force assigned to the wheel brakes corresponds at most to a maximum braking force for the particular wheel brake and/or a braking force ratio between respective wheel brakes is within an approved range for this braking force ratio.

4. Method according to any of the preceding claims, wherein when the anti-lock braking system and/or the electronic stability control as driving dynamics control systems intervene in a driving dynamics of the motor vehicle, the distribution of the braking force between the regenerative brake device and the friction brake device is predetermined by the driving dynamics control system.

5. Method according to any of the preceding claims, wherein the braking force distributed to the wheel brakes is distributed evenly to all wheel brakes when it is determined that there is no cleaning requirement.

6. Method according to any of the preceding claims, wherein if the braking force required for the predetermined deceleration of the motor vehicle is less than or equal to the maximum possible regenerative power of the regenerative brake device and the cleaning requirement has been determined, a lower regenerative power than the maximum possible regenerative power of the regenerative brake device is selected as the first predetermined part of the braking force and the remainder of the required braking force is distributed to the friction brake device.

7. Method according to any of the preceding claims, wherein a larger proportion of the braking force of the friction brake device is distributed to wheel brakes of all rear wheels of the motor vehicle compared with wheel brakes of all front wheels.

8. Method according to any of the preceding claims, wherein the cleaning requirement of the respective wheel brakes is determined via a model depending on the brake pressure applied to the respective wheel brakes and the braking frequency, in particular depending on the brake pressure applied to the respective wheel brakes over their service life and the braking frequency.

9. Method according to any of the preceding claims, wherein the higher the particular determined cleaning requirement at a particular wheel brake, the higher the braking force to be applied to this wheel brake by means of the friction brake device is set.

## Revendications

1. Procédé de fonctionnement d'un système de freinage d'un véhicule automobile, comportant un dispositif de freinage à friction et un dispositif de freinage à récupération, dans lequel un besoin de nettoyage des freins de roue respectifs du dispositif de freinage à friction du véhicule automobile est déterminé (V1), une décélération du véhicule automobile souhaitée par le conducteur est déterminée à l'aide d'une position de pédale de frein d'une pédale de frein découplée mécaniquement du dispositif de freinage à friction et une force de freinage nécessaire pour la décélération souhaitée du véhicule automobile est déterminée (V2), dans lequel une première partie prédéfinie de ladite force de freinage est répartie sur le dispositif de freinage à récupération et le reste de la force de freinage nécessaire est réparti sur les freins de roue du dispositif de freinage à friction (V3), dans lequel la force de freinage à mettre à disposition par le dispositif de freinage à friction est distribuée sur les freins de roue en fonction du besoin de nettoyage déterminé des freins de roue respectifs, dans lequel
- la force de freinage répartie sur les freins de roue du dispositif de freinage à friction est répartie sur les freins de roue en fonction d'au moins un critère de stabilité prédéfini à respecter, et/ou
- lors d'une intervention d'un système antiblocage et/ou d'un contrôle électronique de stabilité en tant que systèmes de régulation de la dynamique de conduite dans une dynamique de conduite du véhicule automobile, la répartition de la force de freinage entre les freins de roue est prédéfinie par le système de régulation de la dynamique de conduite, et/ou
- une puissance de récupération maximale possible du dispositif de freinage à récupération est choisie comme première partie prédéfinie de la force de freinage.

2. Procédé selon la revendication 1, dans lequel, en fonction de la force de freinage attribuée au frein de roue respectif, une pression de freinage hydraulique à appliquer au frein de roue respectif pour le réglage de la force de freinage est déterminée par l'intermédiaire d'une prescription d'attribution mémorisée, et cette pression de freinage déterminée est appliquée au frein de roue associé.

3. Procédé selon l'une des revendications précédentes, dans lequel l'au moins un critère de stabilité est respecté lorsque la force de freinage respective associée aux freins de roue correspond au plus à une force de freinage maximale pour le frein de roue respectif et/ou un rapport de force de freinage entre des freins de roue respectifs se situe au sein d'une plage autorisée pour ce rapport de force de freinage.

4. Procédé selon l'une des revendications précédentes, dans lequel, lors d'une intervention du système antiblocage et/ou du contrôle électronique de la stabilité en tant que systèmes de régulation de la dynamique de conduite dans une dynamique de conduite du véhicule automobile, la répartition de la force de freinage entre le dispositif de freinage à récupération et le dispositif de freinage à friction est prédéfinie par le système de régulation de la dynamique de conduite.

5. Procédé selon l'une des revendications précédentes, dans lequel la force de freinage répartie entre les freins de roue est distribuée uniformément sur tous les freins de roue lorsqu'il est déterminé qu'il n'y a pas de besoin de nettoyage.

6. Procédé selon l'une des revendications précédentes, dans lequel, si la force de freinage nécessaire pour la décélération prédéfinie du véhicule automobile est inférieure ou égale à la puissance de récupération maximale possible du dispositif de freinage à récupération et si le besoin de nettoyage a été déterminé, une puissance de récupération inférieure à la puissance de récupération maximale possible du dispositif de freinage à récupération est choisie comme première partie prédéfinie de la force de freinage et le reste de la force de freinage nécessaire est répartie sur le dispositif de freinage à friction.

7. Procédé selon l'une des revendications précédentes, dans lequel une proportion plus importante de la force de freinage du dispositif de freinage à friction est distribuée sur les freins de roue de toutes les roues arrière du véhicule automobile par comparaison avec les freins de roue de toutes les roues avant.

8. Procédé selon l'une des revendications précédentes, dans lequel le besoin de nettoyage des freins de roue respectifs est déterminé selon un modèle en fonction de la pression de freinage et de la fréquence de freinage appliquées aux freins de roue respectifs, en particulier de la pression de freinage et de la fréquence de freinage appliquées aux freins de roue respectifs pendant leur durée de vie.

9. Procédé selon l'une des revendications précédentes, dans lequel la force de freinage à appliquer à un frein de roue respectif au moyen du dispositif de freinage à friction est réglée de manière à être d'autant plus élevée que le besoin de nettoyage respectif déterminé pour ce frein de roue est élevé.
